# EUROPÄISCHE PATENTSCHRIFT

(11) **EP 3 102 713 B1**
(45) Veröffentlichungstag und Bekanntmachung des Hinweises auf die Patenterteilung: **18.07.2018**
(21) Anmeldenummer: 15705516.1
(22) Anmeldetag: 04.02.2015
(51) Int. Cl.: C22C 19/05, C22C 30/00, C22C 9/01, C22C 9/04, C22F 1/08, F16C 33/12, F16D 23/02

(54) **SCHMIERSTOFFVERTRÄGLICHE KUPFERLEGIERUNG**
LUBRICANT-COMPATIBLE COPPER ALLOY
ALLIAGE DE CUIVRE COMPATIBLE AVEC LE LUBRIFIANT

(30) Priorität: 04.02.2014 DE 102014101343
(43) Veröffentlichungstag der Anmeldung: 14.12.2016
(73) Patentinhaber: Otto Fuchs - Kommanditgesellschaft -, 58540 Meinerzhagen (DE)
(72) Erfinder: GUMMERT, Hermann, 41751 Viersen (DE); REETZ, Björn, 47800 Krefeld (DE); PLETT, Thomas, 57392 Schmallenberg (DE)
(74) Vertreter: Haverkamp, Jens
(86) Internationale Anmeldenummer: PCT/EP2015/052229
(87) Internationale Veröffentlichungsnummer: WO 2015/117972

(56) Entgegenhaltungen:
- CN-A- 101 709 405
- US-A- 5 326 646
- US-A- 5 337 872
- US-A1- 2009 092 517
- ZHANG SHENG-HUA ET AL: "Microstructure and wear properties of some special brasses", JIXIE GONGCHENG CAILAO - MATERIALS FOR MECHANICAL ENGINEERING, JIXIE GONGYEBU SHANGHAI CAILIAO YANJIUSUO, SHANGHAI, CN, Bd. 28, Nr. 6, 30. Juni 2004 (2004-06-30), Seiten 35-38, XP009175887, ISSN: 1000-3738

## Beschreibung

Die Erfindung betrifft eine schmierstoffverträgliche Kupferlegierung, insbesondere geeignet für die Herstellung von reibbelasteten Getriebebauteilen mit Schmiermittelkontakt, wie etwa Synchronringe, sowie ein Verfahren zur Herstellung derartiger Getriebebauteile und ein Getriebe mit derartigen Getriebebauteilen.

Für die Entwicklung einer Kupferlegierung zur Herstellung von in Öl befindlichen, reibbelasteten Werkstücken oder Bauteilen, beispielsweise Synchronringen, mit einer verbesserten Korrosionsbeständigkeit ist das gesamte tribiologische System zu beachten. Dies betrifft neben den oberflächennahen Schichten der Legierung die Zusammensetzung des Schmiermittels, insbesondere die darin vorliegenden Additive, sowie das Material der Gegenreibfläche. Ferner beeinflusst die sich bei einer Reibbelastung einstellende lokale Temperaturverteilung und das Alterungsverhalten des Schmiermittels den korrosiven Verschleiß.

Auf einem Werkstück aus einer Kupferlegierung entsteht unter Reibbelastung bereits nach einer kurzen Kontaktzeit zum Schmiermittel eine Adsorptionsschicht, die vor allem aus Schmiermittelzusätzen besteht. Bei einer thermomechanischen Belastung bildet sich unter der Adsorptionsschicht eine Reaktionsschicht aus miteinander reagierenden Komponenten der Adsorptionsschicht und oberflächennahen Legierungsbestandteilen. Dabei bilden die Adsorptionsschicht und die Reaktionsschicht eine äußere Grenzschicht auf dem Kupferlegierungswerkstück, die von einer mehreren Mikrometer dicken, inneren Grenzschicht unterlagert ist. Aufgrund ihrer Nähe zur äußeren Grenzschicht wird diese sowohl durch die auf die Oberfläche wirkende mechanische Belastung als auch durch die chemischen Umwandlungsprozesse in der Reaktionsschicht beeinflusst. Im Bereich der inneren Grenzschicht können Diffusionsprozesse und Oxidationsvorgänge der Substratlegierung die Reaktionsschichtbildung beeinflussen.

Viele Schmierstoffe beinhalten Additive, wie schwefel- und phosphorhaltiger Zusätze, die bei entsprechender thermomechanischen Belastung durch den Reibkontakt korrosiv wirken können, was wiederum die Lebensdauer eines Werkstückes nicht unbeträchtlich herabsetzt. Es wurden bereits Kupferlegierungen vorgeschlagen, um die korrosive Wirkung von Schwefelbestandteilen im Schmiermittel zu reduzieren. Aus der JP S 60162742 A ist eine Kupferlegierung für die Lagerung eines Turboladers bekannt, die bezogen auf die Gewichtsanteile aus 57 - 61 % Cu, 2,5 - 3,5 % Pb besteht, wobei Fe und Zn als Verunreinigungen vorliegen können. Auf der Reibfläche soll sich eine stabile CuS-Schicht ausbilden.

EP 0 872 565 A1 beschreibt, dass die Schwefelkorrosion einer Kupferlegierung herabgesetzt werden kann, wenn zusätzlich zu Cu und Zn ein Nickelanteil von 10 - 70 Gew.-% sowie oxidierbare Legierungsbestandteile (Zn, Mn, Al und Si) in die Legierung eingebracht werden. Durch eine Oxidschicht soll die Ausbildung einer Kupfersulfidschicht unterdrückt werden. Aus der EP 1 281 838 A2 ist bekannt, dass einer Korrosion durch Schwefelanteile im Schmieröl durch ein ausgewähltes Cu-Zn-Verhältnis entgegengewirkt werden kann. Zusätzlich werden Mn, Al, Si zur Verbesserung der Legierungshärte zugegeben, wobei sich vor allem kristallisierte Mangan-Silizid-Hartphasen bilden. Daher wird bevorzugt ein hoher Mn-Legierungsanteil von bis zu 7 % bei dieser vorbekannten Legierung eingesetzt. JP S 61117240 A schlägt eine Kupferlegierung mit Gewichtsanteilen von 54 - 64 % Cu, 0,5 - 3 % Si, 0,5 - 2 % Al, 3 - 7 % Mn und Rest Zn vor, in der Hartphasenausscheidungen in Form von Mangansiliziden vorliegen. Die Legierung reduziert die Bildung von Kupfersulfidschichten, sodass diese als Lagerwerkstoff für einen Turbolader bei hohen Abgastemperaturen eine geringere Korrosionsneigung zeigt.

Ferner ist aus der DE 41 01 620 C2 eine Kupferlegierung mit einer reduzierten Korrosionsneigung gegenüber Schwefel enthaltenden Schmierölen bekannt. Die Legierungszusammensetzung besteht aus 11,5 - 25 Gew.-% Zn, 5 - 18 Gew.-% Pb, 1 - 3,5 Gew.-% Mn, 0,3 - 1,5 Gew.-% Si. In dem aus einer reinen α-Phase bestehenden Gefüge ist der Bleianteil gleichförmig verteilt. Des Weiteren werden die Silizium- und Manganlegierungsbestandteile so zugegeben, damit diese im stöchiometrischen Verhältnis zur Bildung von Mangansiliziden vorliegen, um ein Auskristallisieren von freiem Silizium und damit eine Versprödung zu vermeiden.

Für reibbelastete Werkstücke, wie beispielsweise Synchronringe verstärken Hartphasenausscheidungen die Oberflächenhärte und verringern damit den Verschleißgrad. Im tribiologischen System mit dem Schmiermittel bilden Hartphasenausscheidungen im oberflächennahen Bereich, die den höchsten Widerstand gegen Abtragungs- und Glättungsprozesse bilden, räumlich begrenzte Bereiche mit hoher mechanischer Belastung, an denen lokal hohe Temperaturen auftreten können. An diesen mechanisch und thermisch besonders belasteten Bereichen des Bauteils werden Bildungs- und Abbauprozesse der Reaktionsschicht beschleunigt, sodass Hartphasenausscheidungen im Hinblick auf die Korrosion nicht unproblematisch sind. Dabei ist zu berücksichtigen, dass bei grobkörnig vorliegenden Hartphaseneinlagerungen unter mechanischer Belastung größere Abschnitte der äußeren und inneren Grenzschicht herausbrechen können, was wiederum den korrosiven Lochfraß verstärkt.

Um diesen Prozessen entgegenzuwirken, schlägt die US 6,793,468 B2 eine Kupferlegierung mit 54 - 64 Gew.-% Cu, 0,2 - 3 Gew.-% Si, 0,2 - 7 Gew.-% Mn, 0,5 - 3,5 Gew.-% Al und Rest Zn vor, in der kristalline Mangansilizide in der Kupferlegierungsmatrix als längliche, ausgerichtete Strukturen vorliegen. Um die genannten Ziele zu erreichen, muss die Ausrichtung der Hartphasen in Axialrichtung bezüglich einer zu lagernden drehenden Welle bzw. zu dem Gegenkörper vorgesehen sein. Für eine Weiterentwicklung dieses Konzepts schlägt DE 10 2011 004 856 A1 vor, die Bildung eines belastbaren Sulfidfilms zu beschleunigen, der im Kontakt zum heißen Schmieröl das Festfressen einer abgleitenden Gegenfläche verhindert. Verwendet wird für diese Zwecke eine Kupferlegierung mit 25 - 45 Gew.-% Zn, 0,3 - 2 Gew.-% Si, 1,5 - 6 Gew.-% Mn und Rest Kupfer, in der orientiert angeordnete kristalline Mangansilizidverbindungen vorliegen. Die Ausscheidungsdichte ist dabei derart gewählt, dass ein durchschnittlicher Zwischenkornabstand von 5 - 30 µm entsteht, der beim Kontakt mit heißem Schmieröl zu einer thermischen Gefügespannung führt, welche die Ausbildung eines gewünschten Sulfidfilms an der Bauteiloberfläche beschleunigt.

Im Hinblick auf eine verbesserte Korrosionsbeständigkeit eines reibbeanspruchten Bauteils ist der Einfluss der einzelnen Legierungsbestandteile des Substrats auf die Zusammensetzung und die makroskopische Struktur der an die Reaktionsschicht angrenzenden inneren Grenzschicht relevant. Hierzu wird in EP 0 709 476 B1 eine gesinterte Kupferlegierung als Reibmaterial in einer Phosphor- und Schwefelkomponenten enthaltenden Schmiermittelumgebung vorgeschlagen, für die intermetallische Hartphasen ausgewählt aus FeMo, FeCr, FeTi, FeW, FeB und Al₂O₃ entstehen. Zusätzlich liegt eine poröse Struktur mit einem mittleren Porendurchmesser von wenigstens 30 µm mit einem Volumenanteil von wenigstens 20 % vor. Die Legierung besteht aus 5 - 40 Gew.-% Zn, 5 - 40 Gew.-% Ni, 1 - 5 Gew.-% Si, 0,1 - 5 Gew.-% Al, 0,5 - 3 Gew.-% Pb und bevorzugt Sn mit einem Anteil von 3-20 Gew.-% sowie Rest Kupfer. Durch die hohen Zink- und Nickelanteile wird die Kupfersulfidbildung unterdrückt. Ferner entstehen Nickelsilizide, die den Reibungskoeffizient verbessern.

Weitere Kupfer-Zink-Legierungen sind aus DE 10 2005 059 391 A1, DE 42 40 157 A1 oder aus CH 223 580 bekannt. Auch diese Legierungen dienen zum Herstellen von in einer Ölumgebung eingesetzten Messingbauteilen, wie beispielsweise Synchronringen. Eingestellt sind diese Legierungen, damit das darin enthaltene Silizium vollständig in die Bildung von Siliziden eingeht. Da Mangan ein bevorzugter Silizidbildner ist, sind die in den Beispiellegierungen genannten Manganangaben entsprechend hoch und überschreiten in aller Regel 2 Gew.-% erheblich. Der Siliziumgehalt ist an die Teile der Silizidbildner angepasst und in den in den vorgenannten Dokumenten angegebenen Beispiellegierungen mit maximal 1 Gew.-% beteiligt.

Vielfach werden Schmierstoffen Additive mit der Zielsetzung zugegeben, die Korrosion auf einer Reibfläche zu verringern und den abrasiven Verschleiß zu mindern. Ein Beispiel eines solchen Korrosionsinhibitors (Anti-Wear-Wirkstoffs) stellt beispielsweise Zinkdialkyldithiophosphat dar. In der Reaktionsschicht bildet sich aus diesem Zuschlag ein die Oberfläche schützendes Phosphatglas. Hierzu findet idealerweise ein Austausch der Liganden des Additivs mit Legierungselementen sowie eine Einlagerung von Substratkationen statt, sodass sich eine belastbare Reaktionsschicht bildet. Allerdings hängen die Oberflächen schützenden Reaktionsprozesse von der Zusammensetzung der inneren Grenzschicht des Substratmaterials ab. Des Weiteren beeinflussen zusätzliche Additive den Prozess, da sie in der Adhäsionsschicht unter Umständen bezüglich der Anhaftung konkurrierend zu den Oberflächen schützenden Additiven wirken. Zusätzlich beachtlich sind das Legierungsgefüge, thermische Vorgänge der Reaktionsschicht im Hinblick auf die Wärmeableitung und lokale Temperaturspitzen für Schichtauf- und -abbauprozesse. Daher kann es in Abhängigkeit des jeweils vorliegenden tribiologischen Systems unter Umständen mit Beteiligung von Korrosionsinhibitoren sogar zu einem unerwünschten chemischen Abbauprozess der Reibschicht kommen. Die bisher bekannten korrosionsbeständigen Kupferlegierungen sind daher jeweils an ein ganz bestimmtes Schmierstoffsystem angepasst.

Ändert sich im Schmierstoff die Additivzusammensetzung, wird somit das gesamte tribiologische System beeinflusst, wobei die wechselwirkenden chemischen Reaktionen an der Metalloberfläche der Reibpartner verändert werden. Daher können auch solche Additive die Bildung der Reaktionsschicht beeinflussen, die dem Schmierstoff nicht mit der Zielsetzung einer Oberflächenveränderung der Reibfläche zugegeben werden, sondern primär zum Schutz oder zur Verbesserung des Grundöls dienen. Des Weiteren besteht die Möglichkeit, dass Schmiermittelalterungsprozesse beeinflusst werden. Dabei können Oxidationsprozesse wirken oder Abbauprodukte von Zuschlagstoffen entstehen, die zusätzlich zur Aufnahme von Verschleißpartikeln den Austausch mit der Adsorptionsschicht auf der Reibfläche beeinflussen.

Neben einer Änderung der Additivzusammensetzung hat auch ein Austausch des Grundöls des Schmierstoffs eine grundlegende Änderung des tribiologischen Systems zur Folge. Derzeit werden für Schmierstoffe, die als Getriebeöle verändert werden, meist Grundöle in Form von Mineralölen, Hydrocrackölen oder synthetische Ölen, wie Polyalphaolefine oder Ester, verwendet. Um der Forderung nach einem bioverträglichen Schmiermittel nachzukommen, kann ein Ersatz des Grundöls durch pflanzliche Öle oder tierische Fette die Adhäsionseigenschaften grundsätzlich ändern, da pflanzliche Öle typischerweise eine hohe Polarität aufweisen und somit die Affinität zur Metalloberfläche begünstigt wird. Die durch einen Wechsel des Schmiermittels, insbesondere dessen Grundöls, bedingten Veränderungen des tribiologischen Systems führen bisher meist zur Notwendigkeit, die Legierungszusammensetzung der Reibpartner anzupassen, um den Korrosionsschutz aufrechtzuerhalten.
US 5,337,872 A offenbart einen Synchronring mit einer Beschichtung aus atomisiertem Pulver, die durch einen Plasma-Flamme hergestellt wird. Die Zusammensetzung der Beschichtung ist eine Cu-Legierung. In diesem Dokument findet sich keine Offenbarung über die Menge an freiem Silizium und dessen Verhältnis des zu dem Zn-Anteil.
US 2009/0092517 A1 offenbart ein extrudiertes Bauteil aus einem Cu-Legierungs-Pulver. Dieser Stand der Technik offenbart ebenfalls nichts über das Vorhandensein von freiem Silizium und macht auch keine Angaben zu bestimmten Phasenanteilen.
Der Erfindung liegt ausgehend von US 5,337,872 A die Aufgabe zugrunde, ein schmierstoffverträgliches Kupferlegierungsbauteil aus einer alternativen Kupferlegierung vorzuschlagen, die für eine große Bandbreite unterschiedlicher Schmierstoffe, insbesondere unterschiedlichen Grundölen und einer Variation von Schmierstoffadditiven, eine hohe Korrosionsbeständigkeit zeigt.
Gelöst wird diese Aufgabe erfindungsgemäß durch das in Anspruch 1 definierte schmierstoffverträgliches Kupferlegierungsbauteil. beträgt; und
ein β-Phasenanteil ≥ 80 % vorliegt und keine siliziumreichen γ-Phasen in der Legierungsmatrix auftreten.
Wenn im Rahmen mit der Erläuterung der Erfindung von unvermeidbaren Verunreinigungen die Rede ist, handelt es sich hierbei um Elemente, die durch Verwendung von recyceltem Material in die Schmelze eingebracht werden, wobei jedes als Verunreinigung anzusehende Element einen Anteil von 0,5 Gew.-% nicht überschreitet. Man wird versuchen, die Verunreinigungen elementbezogen und in der Summe möglichst gering zu halten.
Das erfindungsgemäße Kupferlegierungsbauteil, also beispielsweise ein Synchronring zeichnet sich durch eine hohe Ölverträglichkeit für eine große Bandbreite von Schmierstoffsystemen aus. Dabei wurde erkannt, dass die erfindungsgemäße Legierung besonders stabile Reaktionsschichten in unterschiedlichen tribiologischen Systemen unter Reibwirkung und thermischer Belastung bildet, wobei Einebnungs- und Abtragungsvorgänge der inneren Grenzschicht erheblich verlangsamt sind. Die Stabilisierung der Grenzschicht ergibt sich aus dem gewählten Verhältnis zwischen den Legierungsbestandteilen Si, Cu und Zn. Von Bedeutung ist vor allem das Verhältnis des Anteils freien Siliziums im Vergleich zur Summe der Legierungsbestandteile Kupfer und Zink.
Die Wirkung des Zinkanteils wird in einer Stabilisierung der Reaktionsschicht gesehen, indem eine hinreichende Reaktivität für eine rasche Schichtbildung und Heilung zur Verfügung gestellt wird. Ein zum Teil gegenteiliger Effekt wird durch den Siliziumanteil bewirkt. Wesentlich ist dabei, dass freies, nicht in Siliziden gebundenes Silizium in der Matrix oder in siliziumhaltigen Nichtsilizidphasen mit einem Gewichtsanteil von mindestens 0,4 % gelöst vorliegt. Die vorteilhafte Wirkung tritt bereits dann ein, wenn der Gehalt freien Siliziums über der Schwelle einzelner Verunreinigungen von 0,15 Gew.-% liegt. Der Mindestgewichtsanteil von 0,4 % führt zu einer deutlichen Stabilisierung der Reaktionsschicht. Ein noch höherer Anteil freien Siliziums von bevorzugt mindestens 0,5 % und besonders bevorzugt mindestens 0,6 % verstärkt den gewünschten Effekt auf die Ausbildung der Reaktionsschicht, wobei eine Obergrenze durch die Anforderung an die Verarbeitbarkeit der Legierung gegeben ist. Vermieden sind siliziumreiche γ-Phasen, die zu mechanisch ungünstigeren Legierungseigenschaften führen. Daher ist bevorzugt der Gewichtsanteil des freien Siliziums auf höchstens 2 % und besonders bevorzugt auf höchstens 1,5 % zu begrenzen. Mit der gewählten Obergrenze für den absoluten Siliziumanteil werden Spannungen beim Legierungsguss, die unter Umständen zu einem Reißen führen können, unterbunden und es wird eine vorteilhafte Legierungsbruchhärte aufrechterhalten.

Des Weiteren wird bevorzugt, das Gewichtsverhältnis zwischen dem Legierungsbestandteil Zink und dem absolutem Siliziumanteil im Bereich von 10-40 und bevorzugt im Bereich von 20 - 35 zu wählen. Wird der Zinkgehalt relativ zum Anteil freien Siliziums in der Legierungsmatrix betrachtet, liegt der Quotient zwischen 15 und 75, bevorzugt zwischen 20 und 55. Die im Folgenden erläuterte Balance zwischen der die Reaktivität erhöhenden Komponente Zink und dem die Reaktionsgeschwindigkeit beeinflussenden Gehalt freien Siliziums wird so eingestellt, dass die Reaktionsschichtbildung bezüglich der beteiligten Schmiermitteladditive selektiv erfolgt.

In freier Form wirkt Silizium als Inhibitor gegen die Oxidation weiterer Legierungsbestandteile, insbesondere wird die Oxidationsneigung von Zink verringert, sodass Zinkoxidschichten nur in geringem Maß entstehen und stattdessen Zink in elementarer Form zum Einbau in die Reaktionsschicht vorliegt. Zusätzlich wird angenommen, dass das freie Silizium im Sondermessing die Diffusionsgeschwindigkeit von Drittelementen absenkt und zugleich den Wärmeübertrag innerhalb der Legierung verringert. Dies beeinflusst die Kinetik der Reaktionsschichtbildung dahingehend, dass die Aufbauprozesse verlangsamt werden und gleichzeitig selektiver ablaufen. Statt der Ausbildung einer Oxidschicht mit hohen Zinkoxidanteilen entsteht eine langsam wachsende und stabile Reaktionsschicht, in der das als Reaktionspartner zur Verfügung stehende elementare Zink selektiv mit einzelnen Schmieröladditiven reagiert, während die Aufnahme der meisten derzeitig bekannten Öladditive in die Reaktionsschicht nur in einem geringeren Umfang erfolgt. Dadurch wird die Ausbildung der Reaktionsschicht nicht gänzlich unterbunden, sondern es entsteht ein selektives Schichtwachstum aufgrund der Reaktivitätserhöhung durch den Zinkanteil und die Inhibitorwirkung des in der Matrix oder siliziumhaltigen Phasen gelösten freien Siliziums.

Diese Wechselwirkung hat zur Folge, dass nur ganz bestimmte Schmiermitteladditive mit Oberflächen verändernder Wirkung den Aufbau der Reaktionsschicht beeinflussen. Damit erklärt sich die Breitbandigkeit der Korrosionsfestigkeit der aus der erfindungsgemäßen Legierung hergestellten Werkstücke, beispielsweise von daraus hergestellten Synchronringen, da die meisten Öladditive ohne nachteilige Wirkung auf den Schichtbildungsprozess eingesetzt und ausgetauscht werden können. Insofern bleibt das tribologische System für Werkstücke aus der erfindungsgemäßen Legierung, beispielsweise Synchronringe, in Bezug auf die Reaktionsschicht für eine Vielzahl von Schmiermittelvarianten unverändert bzw. quasi unverändert. Für den Einsatz in unterschiedlichen Schmiermittelumgebungen ist lediglich darauf zu achten, dass ganz bestimmte Additive oder Additivzusammenstellungen nicht verwendet werden, durch die das tribologische System nachteilig beeinflusst werden könnte. Während bei Werkstücken vorbekannter Legierungen immer nur ganz spezifische Schmiermittel eingesetzt werden durften, sind es bei Werkstücken aus der beanspruchten Legierung nur einzelne Schmiermittel bzw. Schmiermittelzusammensetzungen, mit denen die bestimmungsgemäßen Erfolge nicht erzielt werden können. Daher sind die aus der beanspruchten Legierung hergestellten Werkstücke breitbandig Öl verträglich.

Für Werkstücke aus der beanspruchten Legierung wird zur Ausbildung der Reaktionsschicht ganz bewusst ein Verschleiß der äußersten mechanisch beanspruchten Schicht in Kauf genommen, damit sich die stabile Reaktionsschicht ausbildet. Dieses steht im Gegensatz zu der üblichen Vorgehensweise, Verschleiß, auch anfänglichen Verschleiß, zu vermeiden. Bei den Untersuchungen, die zu der beanspruchten Erfindung geführt haben, wurde festgestellt, dass, um eine stabile Reaktionsschicht zu erhalten, nicht nur eine Steuerung des Schichtwachstums einschließlich der Schichtdicke sowie der Schichtzusammensetzung notwendig ist. Bedeutend im Hinblick auf eine stabile Ausbildung der Reaktionsschicht des Bauteils ist auch die Stabilisierung der an die Reaktionsschicht angrenzenden inneren Grenzschicht. Durch die Zugabe von Silizium wird eine verbesserte mechanische Stabilität der Grenzschichten beobachtet, die insbesondere den Widerstand gegen fressenden Verschleiß erhöht. Dieser Effekt wird zusätzlich durch die Ausscheidung von intermetallischen Hartphasen verstärkt, wobei für die erfindungsgemäße Legierung eine Mischung aus Siliziden und Aluminiden vorliegen kann, in den neben Silizium bzw. Aluminium die Legierungsbestandteile Mangan, Eisen und Nickel sowie das Wahlelement Chrom aufgenommen sind. Dabei führt der gewählte Aluminiumanteil in der Legierung dazu, dass primär Aluminium intermetallische Phasen bildet und so die ansonsten für die Silizidbildung notwendigen Elemente abfängt. Als Folge verbleibt ein Siliziumanteil als Überschuss und kann als freies Silizium in der Legierungsmatrix gelöst werden. Damit wird für eine bevorzugte Ausführung der Erfindung das Gewichtsverhältnis der Legierungsanteile so eingestellt, dass der Aluminiumanteil das stöchiometrische Verhältnis zur Summe der Eisen-, Mangan-, Nickel- und Chromanteile übersteigt.

Der geforderte Mindestanteil von 0,4 %, bevorzugt mindestens 0,5 % und besonders bevorzugt mindestens 0,6 % freien Siliziums ergibt sich für das vorliegende Mehrstoffsystem nicht nur durch einen hinreichend hohen Aluminiumanteil, sodass Aluminide in Konkurrenz zu Siliziden gebildet werden. Ein weiterer Einflussfaktor auf die Siliziumlöslichkeit ergibt die Einstellung des Legierungsgefüges, die durch den absoluten Zinkanteil gesteuert werden kann. Liegt ausschließlich oder überwiegend ein β-Messing vor, besteht eine gute Löslichkeit für Silizium in der Legierungsmatrix. Innerhalb der vorgegebenen Legierungsgrenzen sind Anteilskombinationen möglich, für die unterhalb 600°C die α-Phase thermodynamisch stabil ist, in der sich freies Silizium zwar löst, jedoch im geringeren Maße als in der β-Phase. Gleichwohl kann der geforderte Mindestanteil von 0,4 %, bevorzugt mindestens 0,5 % und besonders bevorzugt mindestens 0,6 % freien Siliziums dadurch eingestellt werden, dass durch die gewählten Abkühlungsbedingungen nach der Legierungsschmelze und eventuell weiteren Warmumform- und Glühschritten ein β-Phasenanteil eingefroren wird.

Eine weitere Steuerungsmöglichkeit für die Löslichkeit von Silizium in der Legierungsmatrix ergibt sich ferner im Fall einer Gefügeeinstellung, für die eine kappa-Phase in Form eines Cu-Zn-Al-Si-Mischkristalls entsteht, die in Form feiner Phasenausscheidungen vorliegt. Durch diese Maßnahme kann Silizium aus einem (α+β)-Mischkristall abgegriffen werden. Zur Beeinflussung der Bildung der kappa-Phase kann ein Nachglühen mit einer gesteuerten Abkühlung ausgeführt werden. Zusätzlich beeinflusst das Wahlelement Chrom das Phasengleichgewicht, sodass für eine bevorzugte Ausgestaltung der Legierung Chrom nur als unvermeidbare Verunreinigung enthält.

Kobalt kann an der Legierung mit maximal 1,5 Gew.-% beteiligt sein. Bevorzugt ist jedoch eine Ausgestaltung, bei der der Kobaltgehalt < 0,7 Gew.-% ist oder die Legierung kobaltfrei oder quasi kobaltfrei ist.

Ein Bleigehalt von max. 0,8 Gew.-% wird grundsätzlich als Verunreinigung betrachtet. Es war überraschend festzustellen, dass sich die besondere Ölverträglichkeit der beschriebenen Legierung auch einstellt, wenn diese Pb-frei ist. Dieses war vor dem Hintergrund überraschend, da Legierungen aus dem Stand der Technik zum Erzielen einer Ölverträglichkeit auf einen gewissen Pb-Anteil nicht verzichten konnten. Pb-frei sind im Rahmen dieser Ausführungen solche Legierungen gemäß der Erfindung, deren Pb-Anteil < 0,1 Gew.-% ist.

Es war überraschend festzustellen, dass sich in den mit der erfindungsgemäßen Legierung hergestellten Bauteilen trotz des geringen Mangangehaltes, verglichen mit vorbekannten Legierungen der in Rede stehenden Art, hinreichend Silizide gebildet haben, um dem Bauteil die notwendige Abriebfestigkeit zu verleihen. Überraschend war diese Feststellung, da Mangan bevorzugtes Silizidbildnerelement ist und es der herrschenden Meinung entsprach, dass zum Erhalten der gewünschten Silizidanteile der Mangangehalt aufgrund seiner Affinität zur Silizidbildung entsprechend hoch sein muss. Mit der erfindungsgemäßen Legierung ist es gelungen, auch andere Elemente in die Silizidbildung einzubringen, wie beispielsweise Nickel und/oder Eisen, die jedoch gegenüber Mangan eine deutlich geringere Affinität zu einer Silizidbildung haben. Vor dem Hintergrund, dass die beanspruchte Legierung auch Aluminium als Legierungsbestandteil aufweist, können sich auch Aluminide mit den Elementen Eisen und/Nickel ausbilden, wobei jedoch die Affinität zu einer Silizidbildung überwiegt.

Insofern ist es mit dieser Legierung überraschend gelungen, unter geschicktem Ausnutzen der unterschiedlichen Affinitäten der Elemente zu Silizium nicht nur sicher zu stellen, dass in dem hergestellten Bauteil hinreichend Silizide enthalten sind, sondern auch das gewünschte freie Silizium. Untersuchungen haben gezeigt, dass sich dieses nur in dem beanspruchten Bereich einstellt, wenn auf herkömmliche Herstellungsverfahren zurückgegriffen werden soll.

Werkstücke, hergestellt aus der erfindungsgemäßen Legierungszusammensetzung gewährleisten in Zusammenwirkung mit dem Schmiermittel, den Aufbau einer inneren Grenzschicht, die neben einer hohen thermischen und mechanischen Stabilität eine gute Anhaftung von Reaktionsschichten ermöglicht. Es wird angenommen, dass diese unerwartete Eigenschaft die Folge einer angepassten Diffusionsfähigkeit ist, die sich zum einen auf das Schichtwachstum der Reaktionsschicht auswirkt und zum anderen die Möglichkeit eröffnet, als zusätzlichen Korrosionsschutz eine selbstschmierende Komponente einzusetzen. Diesem Zweck dient die Zugabe von Zinn zur erfindungsgemäßen Legierungszusammensetzung, das durch Diffusion zur Reiboberfläche gelangt und dort selbstschmierend wirkt.

Zur Herstellung der erfindungsgemäßen Legierung wird nach dem Verbinden der Legierungsbestandteile eine Umformung und Warmbehandlung so ausgeführt, dass sich eine β-Phase mit einem Matrixanteil von über 80 % bildet. Zusätzlich zur verbesserten Löslichkeit von Silizium in der Legierungsmatrix resultieren eine hohe Werkstückhärte und ein hoher Widerstand gegen abrasiven Verschleiß, sodass sich für viele Anwendungen eine abschließende Ausscheidungshärtung erübrigt. In diesem Fall kann der Wahlbestandteil Kobalt in der Legierung verringert werden. Bevorzugt kann auf Kobalt bis auf unvermeidbare Verunreinigung gänzlich verzichtet werden. Diesbezüglich wurde überraschend aufgefunden, dass für einen Gewichtsanteil für Kobalt unter 0,7 % die Breitbandigkeit der Ölverträglichkeit der geforderten Legierungszusammensetzung weiter verbessert ist. Es wird daher vermutet dass im vorliegenden Mehrstoffsystem eine Wechselwirkung zwischen Kobalt- und Eisenanteilen sowie auch mit Chrom besteht, die sich indirekt auf den Anteil freien Siliziums auswirkt.

Eine Steigerung der positiven Eigenschaften der vorgenannten Legierung kann mit einer bevorzugten Kupferlegierung mit folgenden Gewichtsanteilen erreicht werden:

| | |
|---|---|
| 54 - 65 % | Kupfer |
| 3,0 - 5,0 % | Aluminium |
| 1,0 - 3,0 % | Silizium |
| 2,0 - 4,0 % | Nickel |
| 0,5 - 1,5 % | Eisen |
| ≤ 1,5 % | Mangan |
| ≤ 0,7 % | Zinn |
| ≤ 1,5 % | Chrom |
| ≤ 0,8 % | Blei |
| Rest | Zink nebst weiteren unvermeidbaren Verunreinigungen, |

wobei freies Silizium mit mindestens 0,4 %, bevorzugt mindestens 0,5 % und besonders bevorzugt mindestens 0,6 % in der Legierungsmatrix oder in siliziumhaltigen, Nichtsilizid-Phasen vorliegt.

Eine weitere Verbesserung der positiven Eigenschaften der vorgenannten Legierung kann mit einer bevorzugten Kupferlegierung mit folgenden Gewichtsanteilen erreicht werden:

| | |
|---|---|
| 56 - 60 % | Kupfer |
| 3,0 - 4,0 % | Aluminium |
| 1,3 - 2,5 % | Silizium |
| 3,0 - 4,0 % | Nickel |
| 0,5 - 1,5 % | Eisen |
| 0,1 -1,5 % | Mangan |
| 0,3 - 0,7 % | Zinn |
| ≤ 0,7 % | Chrom |
| ≤ 0,8 % | Blei |
| Rest | Zink nebst unvermeidbaren Verunreinigungen, |

wobei freies Silizium mit mindestens 0,4 %, bevorzugt mindestens 0,5 % und besonders bevorzugt mindestens 0,6 % in der Legierungsmatrix oder in Silizium haltigen, Nichtsilizid-Phasen vorliegt.

Vor dem Hintergrund der vorstehend beschriebenen Vorteile der erfindungsgemäßen Kupferlegierung bzw. der daraus hergestellten Werkstücke wird ersichtlich, dass sich diese zum Herstellen von in Ölumgebung eingesetzten Bauteilen besonders eignet, wie beispielsweise Synchronringe, Lagerteile oder dergleichen. Dieses bedeutet, dass sich die positiven Eigenschaften der aus dieser Legierung hergestellten Produkte nicht nur einstellen, wenn es sich bei dem Produkt um einen Reibpartner einer Reibpaarung, wie etwa einen Synchronring, handelt, sondern auch um andere in einer Zusammenstellung, beispielsweise einer Paarung vorgesehenen Bauteilen, beispielsweise dasjenige eines Lagers (Axiallager oder auch Radiallager). Zu diesen weiteren Anwendungen zählen auch Buchsen, die als Lagerteile eingesetzt sind. Dabei versteht es sich, dass die besonderen Eigenschaften der aus einer solchen Legierung hergestellten Werkstücke sich vor allem einstellen, wenn diese in ihrer Ölumgebung zumindest zeitweise einer Mangelschmierung ausgesetzt sind.

Auch wenn sich die vorbeschriebenen positiven Eigenschaften in der gesamten beanspruchten Bandbreite einstellen, werden aufgrund von Festigkeitskriterien für Lagerteile bevorzugt Legierungen aus folgender Zusammensetzung eingesetzt, vor allem wenn die damit hergestellten Bauteile höheren mechanischen Belastungen ausgesetzt sind (Angaben in Gew.-%):

| | |
|---|---|
| 59 - 61 % | Kupfer |
| 3,5 - 4,2 % | Aluminium |
| 1,1 - 1,7 % | Silizium |
| 2,6 - 3,8 % | Nickel |
| 0,6 - 1,1 % | Eisen |
| 0,5 - 1,0 % | Mangan |
| 0,1 - 0,3 % | Zinn |
| max. 0,8% | Blei |
| Rest | Zink nebst unvermeidbaren Verunreinigungen, |

wobei freies Silizium mit mindestens 0,4 %, bevorzugt mindestens 0,5 % und besonders bevorzugt mindestens 0,6 % in der Legierungsmatrix oder in Silizium haltigen, Nichtsilizid-Phasen vorliegt.

Die nachfolgend dargelegten Versuche wurden mit Halbzeugen mit folgenden Legierungsanteilen ausgeführt (Angaben in Gew.-%):

| | |
|---|---|
| 60 % | Kupfer |
| 4,0 % | Aluminium |
| 1,6 % | Silizium |
| 3,2 % | Nickel |
| 0,9 % | Eisen |
| 0,9 % | Mangan |
| 0,2 % | Zinn |
| 0,8 % | Blei |
| Rest | Zink nebst unvermeidbaren Verunreinigungen |

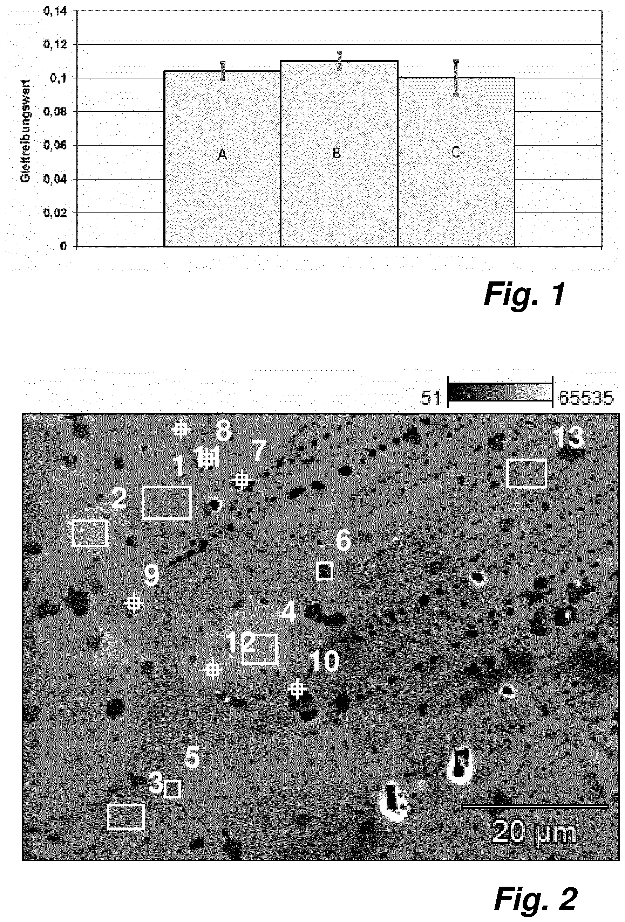

Die untersuchten stranggepressten Halbzeuge mit obiger Legierungszusammensetzung weisen eine hohe Zähigkeit, eine hohe Bruchdehnung und eine hinreichende Festigkeit auf. Dabei kann Werkstücke bzw. Halbzeuge mit einer Härte HB 2,5/62,5 im Bereich von 250 - 270 erreicht werden. Da diese Festigkeit für viele Anwendungsfälle ausreichend ist, benötigendie aus dieser Legierung hergestellten Werkstücke keine nachgeschaltete Aushärtung. Bei Werkstücken aus vorbekannten Legierungen lässt sich eine solche Härte erst mit dem zusätzlichen Schritt einer Aushärtung erreichen. Zugversuche zeigen eine 0,2 %-Dehnungsgrenze im Bereich von 650 - 750 MPa. Des Weiteren weist die erfindungsgemäße Legierung einen Gleitreibungswert ≥ 0,1 auf. Dies wird anhand **Figur 1** verdeutlicht, die A Versuche im Schmierstoff Titan EG 52512, mit B Versuche im Schmierstoff BOT 350 M3 und mit C Messungen mit BOT 402 als Schmierstoffe bezeichnet.

Der Anteil des freien, nicht in Form von Siliziden gebundenen Siliziums wurde durch rasterelektronenmikroskopische (REM) Untersuchungen an ein aus der erfindungsgemäßen Legierung hergestellten Halbzeug ermittelt. **Figur 2** zeigt eine Aufnahme mit markierten Messpunkten für die Analyse mittels Röntgenphotoelektronenspektroskopie (EDX). In der nachfolgenden Tabelle sind der in diesem Zusammenhang ermittelte Anteil freien Siliziums für ausgewählte Messpunkten/Messflächen wiedergeben, die der Legierungsmatrix zugeordnet werden können und damit außerhalb intermetallischer Hartphasen liegen:

| **Messpunkt** | **Si** |
|---|---|
| 2 | 0.74 |
| 3 | 0.78 |
| 4 | 0.79 |
| 7 | 0.95 |
| 12 | 0.80 |
| 13 | 0.68 |

Ferner wurden im Einzelnen nicht dargestellte transmissionselektronenmikroskopische Untersuchungen durchgeführt, die entsprechend den REM-EDX-Messungen über den gesamten Bereich der ausgewählten Legierungszusammensetzung die Existenz freien Siliziums bestätigten. Dabei wurde ein Anteil freien Siliziums mit mindestens 0,6 % Gewichtsprozent gemessen.

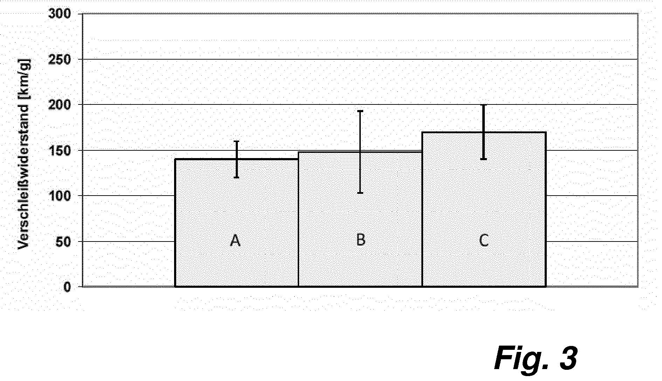

**Figur 3** zeigt die Ergebnisse von Verschleißexperimenten mit der Versuchslegierung in den voranstehend genannten Schmierstoffen A (Titan EG 52512), B (BOT 350 M3) und C (BOT 402), die die breitbandige Ölverträglichkeit zeigen. In allen Schmierstoffsystemen wurde der Aufbau einer stabilen Reaktionsschicht ermittelt, wobei die Versuche bei einer Öltemperatur von 80°C, einer Flächenpressung von 50 MPa und eine r Gleitgeschwindigkeit 1 m/s ausgeführt wurden. Nach einem zurückgelegten Reibweg über 100 km liegen die Verschleißwiderstände in einem relativ engen Bereich von 140-170 km/g. Es war überraschend festzustellen, dass bei den vorbeschriebenen Verschleißexperimenten das Probenstück nicht nur eine besondere breitbandige Ölverträglichkeit zeigt, sondern auch der jeweilige Verschleißwiderstand hoch ist und trotz Einsatz unterschiedliche Ölsorten die Bandbreite der ermittelten Verschleißwiderstände recht eng ist.

Vergleichbare Ergebnisse können auch in Pb-freien Varianten erzielt werden. Legierungen der Pb-freien Varianten eignen sich letztendlich zum Herstellen von Halbzeugen oder Bauteilen für dieselben Einsatzzwecke wie aus den vorbeschriebenen Pb-haltigen Legierungsvarianten, haben jedoch den Vorteil, dass diese Pb-frei sind. Mitunter wird dieses vor allem aus Umweltverträglichkeitsgründen gefordert.

Hierfür eignet sich eine Zusammensetzung der Legierung mit den folgenden, in Gewichtsprozent angegebenen Elementen:

| | |
|---|---|
| 59 - 62 % | Kupfer |
| 3,5 - 4,5 % | Aluminium |
| 1,2 - 1,8 % | Silizium |
| 2,5 - 3,9 % | Nickel |
| 0,7 - 1,1 % | Eisen |
| 0,7 - 1,0 % | Mangan |
| 0,05 - 0,5 % | Zinn |
| ≤ 1,5 % | Chrom |
| ≤ 0,1 % | Blei |
| Rest | Zink nebst weiteren unvermeidbaren Verunreinigungen, |

wobei freies Silizium mit mindestens 0,4 %, bevorzugt mindestens 0,5 % und besonders bevorzugt mindestens 0,6 % in der Legierungsmatrix oder in Silizium haltigen, Nichtsilizid-Phasen vorliegt.

Ölverträglichkeitsuntersuchungen wurden aus dieser Legierungsgruppe anhand zweier unterschiedlicher Legierungstypen vorgenommen, die sich hinsichtlich ihres Nickel- und Aluminiumsanteils voneinander unterscheiden. Interessanterweise zeigen die mit diesen Legierungen erzielten Ölverträglichkeitsuntersuchen, dass trotz Fehlens von Blei als Legierungsbestand die Ölverträglichkeit derjenigen entspricht, wie diese zu der vorstehend beschriebenen Pb-haltigen Legierung dargestellt ist. Hierbei handelt es sich um folgende Legierungstypen (Angaben in Gew.-%), wobei jeweils freies Silizium mit mindestens 0,4 %, bevorzugt mindestens 0,5 % und besonders bevorzugt mindestens 0,6 % in der Legierungsmatrix oder in siliziumhaltigen, Nichtsilizid-Phasen vorliegt:

**Legierungstyp 1**

| | |
|---|---|
| 59,5 % - 61,5 % | Kupfer |
| 3,6 - 4,2 % | Aluminium |
| 1,2 - 1,8 % | Silizium |
| 2,8 - 3,3 % | Nickel |
| 0,7 - 1,1 % | Eisen |
| 0,6 - 1,2 % | Mangan |
| ≤ 0,28 % | Zinn |
| < 0,1 % | Blei |
| Rest | Zink nebst unvermeidbaren Verunreinigungen |

**Legierungstyp 2**

| | |
|---|---|
| 58,5 - 61,0 % | Kupfer |
| 3,9 - 4,4 % | Aluminium |
| 1,2 - 1,8 % | Silizium |
| 3,3 - 4,0 % | Nickel |
| 0,7 - 1,1 % | Eisen |
| 0,6 - 1,2 % | Mangan |
| ≤ 0,28 % | Zinn |
| < 0,1 % | Blei |
| Rest | Zink nebst unvermeidbaren Verunreinigungen |

Eine der konkret aus dem Legierungstyp 1 hinsichtlich seiner Ölverträglichkeit untersuchte Probe wies folgende Zusammensetzung auf (Angaben in Gew.-%):

| | |
|---|---|
| 60 % | Kupfer |
| 4,0 % | Aluminium |
| 1,6 % | Silizium |
| 3,2 % | Nickel |
| 0,9 % | Eisen |
| 0,9 % | Mangan |
| 0,2 % | Zinn |
| 0,02 % | Blei |
| Rest | Zink nebst unvermeidbaren Verunreinigungen |

Die Zusammensetzung der untersuchten Probe aus dem Legierungstyp 2 wies folgende Zusammensetzung auf (Angaben in Gew.-%):

| | |
|---|---|
| 60 % | Kupfer |
| 4,2 % | Aluminium |
| 1,6 % | Silizium |
| 3,7 % | Nickel |
| 0,9 % | Eisen |
| 0,9 % | Mangan |
| 0,2 % | Zinn |
| 0,02 % | Blei |
| Rest | Zink nebst unvermeidbaren Verunreinigungen |

Buchsen als Lagerteile können aus einer solchen Legierung mit den an sich bekannten Prozessschritten hergestellt werden. Dieses umfasst folgende Schritte:
- Pressen des Rohrvormaterials,
- Weichglühen des gepressten Rohrvormaterials
- Kaltziehen des weichgeglühten Rohrvormaterials um maximal 5 %, vorzugsweise um 2 bis 3 %
- thermisches Entspannen des kaltgezogenen Halbzeuges

## Patentansprüche

1. Schmierstoffverträgliches Kupferlegierungsbauteil umfassend in Gewichtsprozent:
| | |
|---|---|
| 54 - 65 % | Kupfer |
| 2,5 - 5,0 % | Aluminium |
| 1,0 - 3,0 % | Silizium |
| 2,0 - 4,0 % | Nickel |
| 0,1 - 1,5 % | Eisen |
| ≤ 1,5 % | Mangan |
| ≤ 1,5 % | Zinn |
| ≤ 1,5 % | Chrom |
| ≤ 1,5 % | Kobalt |
| ≤ 0,8 % | Blei |
| Rest | Zink nebst weiteren unvermeidbaren Verunreinigungen, |
wobei freies Silizium mit einem Gewichtsanteil von mindestens 0,4 % und höchstens 2 % in der Legierungsmatrix oder in siliziumhaltigen, Nichtsilizid-Phasen vorliegt, und
das Gewichtsverhältnis zwischen Zink und freiem Silizium 15 - 75 beträgt; und
ein β-Phasenanteil größer als 80 % vorliegt und keine siliziumreichen γ-Phasen in der Legierungsmatrix auftreten.

2. Kupferlegierungsbauteil nach Anspruch 1 mit 3,0-5,0 % Aluminium, 0,5 - 1,5 % Eisen und ≤ 0,7 % Zinn in Gewichtsprozent.

3. Kupferlegierungsbauteil nach Anspruch 2 mit 56 - 60 % Kupfer, 3,0 - 4,0 % Aluminium, 1,3 - 2,5 % Silizium, 3,0 - 4,0 % Nickel, 0,5 - 1,5 % Eisen, 0,1 - 1,5 % Mangan und 0,3 - 0,7 % Zinn in Gewichtsprozent.

4. Kupferlegierungsbauteil nach Anspruch 1 oder 2 mit 59 - 62 % Kupfer, 3,5 - 4,5 % Aluminium, 1,2 - 1,8 % Silizium, 2,5 - 3,9 % Nickel, 0,7 - 1,1 % Eisen, 0,7 - 1,0 % Mangan, 0,05 - 0,5 % Zinn und ≤ 0,1 % Blei.

5. Kupferlegierungsbauteil nach einem der Ansprüche 1 bis 4, **dadurch gekennzeichnet, dass** der Anteil freien Siliziums mindestens 0,65 % Gewichtsprozent beträgt.

6. Kupferlegierungsbauteil nach einem der Ansprüche 1 bis 5, **dadurch gekennzeichnet, dass** das Gewichtsverhältnis zwischen Zink und freiem Silizium im Bereich von 20 - 55 gewählt ist.

7. Kupferlegierungsbauteil nach einem der vorausgehenden Ansprüche, **dadurch gekennzeichnet, dass** der Aluminiumanteil das stöchiometrische Verhältnis zur Summe der Eisen-, Mangan-, Nickel- und Chromanteilen übersteigt.

8. Kupferlegierungsbauteil nach einem der vorausgehenden Ansprüche, **dadurch gekennzeichnet, dass** das Verhältnis der Summe der Elemente Ni + Fe + Mn zu Si ≤ 3,45, vorzugsweise ≤ 3,25 ist.

9. Kupferlegierungsbauteil nach einem der vorstehenden Ansprüche, **dadurch gekennzeichnet, dass** Blei als Verunreinigung mit max. 0,8 Gew.-% am Aufbau der Legierung beteiligt ist.

10. Verfahren zum Herstellen eines Werkstückes aus einer Kupferlegierung nach einem der vorausgehenden Ansprüche, **dadurch bestimmt,** dass wenigstens ein Warmbehandlungsschritt mit anschließender Abkühlung so ausgeführt wird, dass der Anteil freien Siliziums in der Matrix oder in siliziumhaltigen, Nichtsilizid-Phasen mindestens 0,4 %, entspricht.

11. Verfahren nach Anspruch 10, **dadurch gekennzeichnet, dass** die Verfahrensführung des Warmbehandlungsschrittes und die nachfolgende gesteuerte Abkühlung den β-Phasenanteil von mindestens 80 % erzeugen.

12. Verfahren nach Anspruch 10 oder 11, **dadurch gekennzeichnet, dass** aus der Kupferlegierung ein Synchronring für ein Getriebe gefertigt wird.

13. Getriebe mit zumindest einem reibbelasteten Kupferlegierungsbauteil, etwa einem Synchronring, gemäß einem der Ansprüche 1 bis 9, welches Getriebe ein Getriebegehäuse umfasst, in dem das aus der Kupferlegierung hergestellte Getriebebauteil in einer Getriebeölumgebung angeordnet ist, welches Getriebebauteil auf seiner reibbelasteten Fläche eine Reaktionsschicht mit in den Getriebeöl enthaltenen Additive und freiem, in der Matrix oder in siliziumhaltigen, nicht Silizid-Phasen als Reaktionselement befindlichen Silizium oder deren Reaktions- und/oder Zerfallsprodukte aufweist.

## Claims

1. Lubricant-compatible copper alloy component, comprising in weight percentages:
| | |
|---|---|
| 54 - 65 % | copper |
| 2.5 - 5.0 % | aluminium |
| 1.0 - 3.0 % | silicon |
| 2.0 - 4.0 % | nickel |
| 0.1 - 1.5 % | iron |
| ≤ 1.5 % | manganese |
| ≤ 1.5 % | tin |
| ≤ 1.5 % | chrome |
| ≤ 1.5 % | cobalt |
| ≤ 0.8 % | lead |
remainder zinc along with further unavoidable impurities wherein free silicon with a weight percentage of at least 0.4 % and maximum 2% is present in the alloy matrix or in silicon-containing non-silicide phases, and the weight ratio between zinc and free silicon is 15-75; and a β phase proportion greater than 80 % is present, and no silicon-rich γ-phases occur in the alloy matrix.

2. Copper alloy component according to claim 1, with 3.0 - 5.0 %, aluminium, 0.5-1.5% iron, and ≤ 0.7 % tin in weight percentages.

3. Copper alloy component according to claim 2, with 56-60 % copper, 3.0-4.0 % aluminium, 1.3-2.5 % silicon, 3.0-4.0 % nickel, 0.5-1.5 % iron, 0.1-1.5 % manganese, and 0.3-0.7% tin in weight percentages

4. Copper alloy component according to claim 1 or 2, with 59-62 % copper, 3.5-4.5 % aluminium, 1.2-1.8 % silicon, 2.5-3.9 % nickel, 0.7-1.1 % iron, 0.7-1.0 % manganese, 0.05-0.5% tin and ≤ 0.1 % lead.

5. Copper alloy component according to any one of claims 1 to 4, **characterised in that** the proportion of free silicon is at least 0.65 % in weight percentage.

6. Copper alloy component according to any one of claims 1 to 5, **characterised in that** the weight ratio between zinc and free silicon is selected in the range from 20-55.

7. Copper alloy component according to any one of the preceding claims, **characterised in that** the aluminium proportion exceeds the stoichiometric ratio to the sum total of the iron, manganese, and chrome proportions.

8. Copper alloy component according to any one of the preceding claims, **characterised in that** the ratio of the sum of the elements Ni + Fe to Si ≤ 3.45, preferably ≤ 3.25.

9. Copper alloy component according to any one of the preceding claims, **characterised in that** lead is present as an impurity with a maximum of 0.8% by weight in the structure of the alloy.

10. Method for producing a workpiece from a copper alloy according to any one of the preceding claims, **characterised in that** at least one thermal treatment step with subsequent cooling is carried out in such a way that the proportion of free silicon in the matrix or in the silicon-containing non-silicide phases corresponds to at least 0.4%.

11. Method according to claim 10, **characterised in that** the method performance of the thermal treatment step and the subsequent controlled cooling produces the β phase proportion of at least 80%.

12. Method according to claim 10 or 11, **characterised in that** from the copper alloy a synchronising ring for a gear is produced.

13. Gear with at least one copper alloy component subject to friction, such as a synchroniser ring, according to any one of claims 1 to 9, said gear comprising a gear housing, in which the gear component produced from the copper alloy is arranged in a gear oil environment, said gear component comprising on its surface subject to friction a reaction layer with additive contained in the gear oil and free silicon present as a reaction element in the matrix or in silicon-containing non-silicide phases, or their reaction products and/or waste products.

## Revendications

1. Pièce en alliage de cuivre compatible avec un lubrifiant comportant en pourcentage de poids :
| | |
|---|---|
| 54 à 65 % | cuivre |
| 2,5 à 5,0 % | aluminium |
| 1,0 à 3,0 % | silicium |
| 2,0 à 4,0 % | nickel |
| 0,1 à 1,5 % | fer |
| ≤ 1,5 % | manganèse |
| ≤ 1,5 % | étain |
| ≤ 1,5 % | chrome |
| ≤ 1,5 % | cobalt |
| ≤ 0,8 % | plomb |
reste zinc, auxquels s'ajoutent d'inévitables impuretés, du silicium libre étant présent dans la matrice de l'alliage ou dans les phases contenant du silicium, sans siliciure, avec un pourcentage de poids d'au moins 0,4 % et d'au maximum 2 %, et le rapport pondéral entre le zinc et le silicium libre étant de 15 pour 75 ; et une teneur de phase β supérieure à 80 % étant présente et aucune phase γ riche en silicium ne se présentant dans la matrice de l'alliage.

2. Pièce en alliage de cuivre selon la revendication 1 comportant 3,0 à 5,0 % d'aluminium, 0,5 à 1,5 % de fer et ≤ 0,7 % d'étain en pourcentage de poids.

3. Pièce en alliage de cuivre selon la revendication 2 comportant 56 à 60 % de cuivre, 3,0 à 4,0 % d'aluminium, 1,3 à 2,5 % de silicium, 3,0 à 4,0 % de nickel, 0,5 à 1,5 % de fer, 0,1 à 1,5 % de manganèse et 0,3 à 0,7 % d'étain en pourcentage de poids.

4. Pièce en alliage de cuivre selon la revendication 1 ou 2 comportant 59 à 62 % de cuivre, 3,5 à 4,5 % d'aluminium, 1,2 à 1,8 % de silicium, 2,5 à 3,9 % de nickel, 0,7 à 1,1 % de fer, 0,7 à 1,0 % de manganèse et 0,05 à 0,5 % d'étain et ≤ 0,1 % de plomb.

5. Pièce en alliage de cuivre selon l'une des revendications 1 à 4, **caractérisée en ce que** la teneur en silicium libre s'élève à au moins 0,65 % de poids.

6. Pièce en alliage de cuivre selon l'une des revendications 1 à 5, **caractérisée en ce que** le rapport pondéral entre le zinc et le silicium libre a été choisi dans une plage de 20 à 55.

7. Pièce en alliage de cuivre selon l'une des revendications précédentes, **caractérisée en ce que** la teneur en aluminium dépasse le rapport stoechiométrique de la somme des teneurs en fer, manganèse, nickel et chrome.

8. Pièce en alliage de cuivre selon l'une des revendications précédentes, **caractérisée en ce que** le ratio de la somme des éléments Ni + Fe + Mn par rapport à Si est ≤ 3,45, de préférence ≤ 3,25.

9. Pièce en alliage de cuivre selon l'une des revendications précédentes, **caractérisée en ce que** le plomb en tant qu'impureté est impliqué avec au max. 0,8 % de poids dans la structure de l'alliage.

10. Procédé pour fabriquer une pièce en alliage de cuivre selon l'une des revendications précédentes, **caractérisé en ce que** au moins une étape de traitement thermique est réalisée et suivie d'un refroidissement de telle sorte que la teneur en silicium libre dans la matrice ou dans des phases contenant du silicium, sans siliciure, correspond à au moins 0,4 %.

11. Procédé selon la revendication 10, **caractérisé en ce que** la conduite du procédé de l'étape de traitement thermique et le refroidissement piloté par la suite génèrent une teneur de phase β d'au moins 80 %

12. Procédé selon la revendication 10 ou 11, **caractérisé en ce qu'une** bague de synchronisation pour une transmission est fabriquée à partir de l'alliage de cuivre.

13. Transmission comportant au moins une pièce en alliage de cuivre soumise à la friction, par exemple une bague de synchronisation selon l'une des revendications 1 à 9, laquelle transmission comporte une boîte de vitesses, dans laquelle est disposée, dans un environnement d'huile de transmission, la pièce de transmission fabriquée en alliage de cuivre, laquelle pièce de transmission présente sur sa surface soumise à la friction, une couche de réaction avec des additifs contenus dans l'huile de transmission et du silicium libre qui se trouve en tant qu'élément de réaction dans la matrice ou dans les phases contenant du silicium, sans siliciure, ou leurs produits de réaction et/ou de décomposition.
